# EUROPEAN PATENT APPLICATION

(11) **EP 2 105 779 A2**
(43) Date of publication of application: **30.09.2009**
(21) Application number: 09004050.2
(22) Date of filing: 20.03.2009
(51) Int. Cl.: G02B 23/24

(54) **Illumination optical system for endoscope and assembly method thereof**

(30) Priority: 21.03.2008 JP 2008073855; 24.03.2008 JP 2008075898
(71) Applicant: FUJIFILM Corporation, Minato-ku Tokyo (JP)
(72) Inventor: Kitano, Ryou, Saitama-shi, Saitama-ken (JP); Takahashi, Kazuaki, Saitama-shi, Saitama-ken (JP); Yashiro, Takashi, Saitama-shi, Saitama-ken (JP); Yamamoto, Gouki, Saitama-shi, Saitama-ken (JP)
(74) Representative: Klunker . Schmitt-Nilson . Hirsch

(57) **Abstract**

Allowing the entirety of a positive lens surface to be used as the effective diameter in an endoscope illumination optical system. Illumination lens (11) having positive lens surface (11a) and side surface (11c) formed in a substantially cylindrical shape is fixed to the inside of through-hole (21) of distal end member (20) . Further, light guide (30) is fixed to the inside of through-hole (21) of distal end member (20) so as to face positive lens surface (11a). Through-hole (21) has substantially cylindrical lens accommodation section (21L) for accommodating illumination lens (11) and light guide accommodation section (21F), in communication with lens accommodation section (21L), for accommodating light guide (30). Illumination lens (11) is fixed, at side surface (11c), to the inside of lens accommodation section (21L) such that light outputted from light guide (30) is incident on outer circumferential region (11x) of the positive lens surface (11a).

## Description

### BACKGROUND OF THE INVENTION

### Field of the Invention

The present invention relates to an illumination optical system for an endoscope that constitutes an illumination window, provided at the distal end of the endoscope, for emitting illumination light to a subject and an assembly method thereof.

### Description of the Related Art

A wide-angle illumination optical system is used for an endoscope in order to emit illumination light having an appropriate illuminance distribution onto a subject in a body cavity. Japanese Unexamined Patent Publication Nos. 5(1993)-119272 and 5(1993)-157967 (Patent Document 1 and Patent Document 2) disclose an illumination lens that includes a positive lens having an aspheric surface on one side, and the aspheric surface is formed such that the curvature gradually becomes smaller toward the outer circumference from the center of the positive lens. The illumination lens has a less amount of light loss and may solely provide a wide-angle and favorable illuminance distribution corresponding to the performance achievable by the combination of three lenses.

Japanese Unexamined Patent Publication No. 2005-074015 (Patent Document 3) discloses a light distribution lens in which a circumferential groove is provided in the outer circumferential wall which is mirror-finished to provide a smooth surface, and an air layer is provided by the circumferential groove between the outer circumferential wall and a distal end member. This illumination lens allows wide-angle light emission by totally reflecting light incident on a concave surface thereof and diffused to the outer circumferential wall by the smooth surface.

Each of such illumination lenses is attached to a distal end member of an endoscope, for example, by applying an adhesive between the illumination lens and the distal end member. Japanese Unexamined Patent Publication No. 2002-078672 (Patent Document 4), in particular, discloses a structure in which a margin is provided at the bottom of a hole where an illumination lens is fitted to prevent an adhesive from flowing out to the effective diameter of the illumination lens.

Even when such a lens as described in Patent Document 1 is used, the lens properties may not be fully utilized unless the lens is appropriately mounted in the distal end of an endoscope. That is, it is desirable that the entirety of the positive lens surface of the illumination lens is used as the effective diameter, but Patent Document 1 poses a problem that a light blocking area is formed on the positive lens surface, thereby causing light amount loss.

When using such an illumination lens as described in Patent Document 1 or Patent Document 2, it is conceivable that the illumination lens is fixed, at the side surface, to the distal end member using an adhesive, as described in Patent Document 4. But, it is difficult to control the amount of adhesive which poses a problem that the adhesive may sometimes flow out to the positive lens surface, thereby causing light amount loss. In particular, the illumination lens described in Patent Document 1 or Patent Document 2 is fixed to the inside of a through-hole, so that Patent Document 1 and Patent Document 2 pose a problem that the margin for trapping the adhesive as described in Patent Document 4 can not be provided at the bottom.

In view of the circumstances described above, it is an object of the present invention to provide an illumination optical system for an endoscope in which the entirety of a positive lens surface is allowed to be used as the effective diameter, and an assembly method thereof.

### SUMMARY OF THE INVENTION

An illumination optical system for an endoscope according to the present invention is an illumination optical system which includes a distal end member with a through-hole, an illumination lens, fixed to the inside of the through-hole of the distal endmember, having a positive lens surface and a side surface formed in a substantially cylindrical shape, and a light guide fixed to the inside of the through-hole of the distal end member so as to face the positive lens surface of the illumination lens, in which the through-hole has a lens accommodation section, having a substantially cylindrical shape, for accommodating the illumination lens and a light guide accommodation section, in communication with the lens accommodation section, for accommodating the light guide, and illumination lens is fixed, at the side surface, to the inside of the lens accommodation section such that light outputted from the light guide is incident on an outer circumferential region of the positive lens surface.

An assembly method of an illumination optical system for an endoscope according to the present invention is a method for fixing an illumination lens having a positive lens surface and a side surface formed in a substantially cylindrical shape to the inside of a through-hole formed in a substantially cylindrical shape in a distal end member, the method including the steps of inserting a positioning zig into the through-hole from a first end, inserting the illumination lens, from the side of the positive lens surface, into the through-hole from a second end, and fixing the illumination lens, at the side surface, to the inside of the through-hole while holding the positive lens surface by a tip surface of the positioning zig.

Here, the illumination lens may be any illumination lens as long as it has a positive lens surface on at least either one of the sides, but preferably, it is an illumination lens having an aspheric positive lens surface whose curvature gradually becomes smaller than the approximated curvature toward the outer circumference from the optical axis.

The diameter of the light guide accommodation section may be not greater than the diameter of the illumination lens accommodation section.

Further, the illumination lens may have a groove, in which an adhesive is filled, in a non-optical path area of the side surface. Here, the groove may have any shape as long as it is formed in the side surface, and it may formed, for example, in a U-shape, a rectangular shape, or a streamline shape. Further, the groove may be any groove as long as it functions as an adhesive trap in which an adhesive is filled. For example, when fixing the illumination lens to the distal end member, an adhesive may be applied to the groove before inserting the illumination lens into the through-hole, or inserting the illumination lens into the through-hole first and then injecting the adhesive to the side of the illumination lens to cause the groove to function as the adhesive trap.

Still further, the groove may have any depth as long as it is within the non-optical path area which is uniquely determined by the curvature of the positive lens surface, the diameter and total length of the illumination lens, and the like.

According to the illumination optical system for an endoscope of the present invention, the system includes a distal end member with a through-hole, an illumination lens, fixed to the inside of the through-hole of the distal end member, having a positive lens surface and a side surface formed in a substantially cylindrical shape, and a light guide fixed to the inside of the through-hole of the distal end member so as to face the positive lens surface of the illumination lens, in which the through-hole has a lens accommodation section, having a substantially cylindrical shape, for accommodating the illumination lens and a light guide accommodation section, in communication with the lens accommodation section, for accommodating the light guide, and illumination lens is fixed, at the side surface, to the inside of the lens accommodation section such that light outputted from the light guide is incident on an outer circumferential region of the positive lens surface. Thus, when the illumination optical system is fixed to the inside of the lens accommodation section, this may provide a space for the optical path of light free from the blockage of the distal end member in front of the positive lens surface so that the effective diameter of the positive lens surface is extended to the outer circumferential region and light amount loss at the illumination lens may be prevented.

Further, a groove provided in a non-optical path area of the side surface of the illumination lens may trap an adhesive, so that the adhesive is prevented from flowing out to the positive lens surface side. Accordingly, the positive lens surface of the illumination lens is not blocked and the entire surface may be used as the effective diameter, whereby light amount loss at the illumination lens may be prevented.

Where the groove is formed in a ring shape along a circumference of the side surface, an adhesive outflow may be prevented reliably over the entire circumference of the positive lens surface.

Further, formation of the groove in a streamline shape toward the axis direction allows an adhesive to flow into the groove easily, so that an adhesive outflow is prevented reliably over the entire circumference of positive lens surface.

According to the assembly method of an illumination optical system for an endoscope of the present invention, the method is for use in fixing an illumination lens having a positive lens surface and a side surface formed in a substantially cylindrical shape to the inside of a through-hole formed in a substantially cylindrical shape in a distal end member, and the method includes the steps of inserting a positioning zig into the through-hole from a first end, inserting the illumination lens, from the side of the positive lens surface, into the through-hole from a second end, and fixing the illumination lens, at the side surface, to the inside of the through-hole while holding the positive lens surface by a tip surface of the positioning zig. This eliminates the need for providing a latch piece for positioning the illumination lens on the side of the distal end member when assembling the illumination lens, so that the positive lens surface is not blocked by the latch piece and the entirety of the positive lens surface may be used as the effective diameter, whereby light amount loss at the illumination lens may be prevented.

Where the diameter of the light guide accommodation section is not greater than the diameter of the lens accommodation section, a small diameter endoscope may be realized by reducing the size of the light guide.

### BRIEF DESCRIPTION OF THE DRAWINGS

Figure 1 schematically illustrates an exemplary embodiment of an endoscope in which an illumination optical system of the present invention is employed.
Figure 2 schematically illustrates an example of distal end section of the endoscope shown in Figure 1.
Figure 3 illustrates an exemplary embodiment of the illumination optical system of the present invention in cross-section.
Figure 4 illustrates an example of optical path of light outputted from the light guide shown in Figure 3.
Figure 5 illustrates an example of illumination optical system in cross section with a latch piece provided in the through-hole.
Figure 6 schematically illustrates an assembly process of the assembling method of an illumination optical system for an endoscope of the present invention.
Figure 7 schematically illustrates an assembly process of the assembling method of an illumination optical system for an endoscope of the present invention.
Figure 8 schematically illustrates an assembly process of the assembling method of an illumination optical system for an endoscope of the present invention.
Figure 9 illustrates an exemplary embodiment of an illumination lens of the present invention in cross section.
Figure 10 illustrates an example of optical path of light outputted from the light guide shown in Figure 9.

### DESCRIPTION OF THE PREFERRED EMBODIMENTS

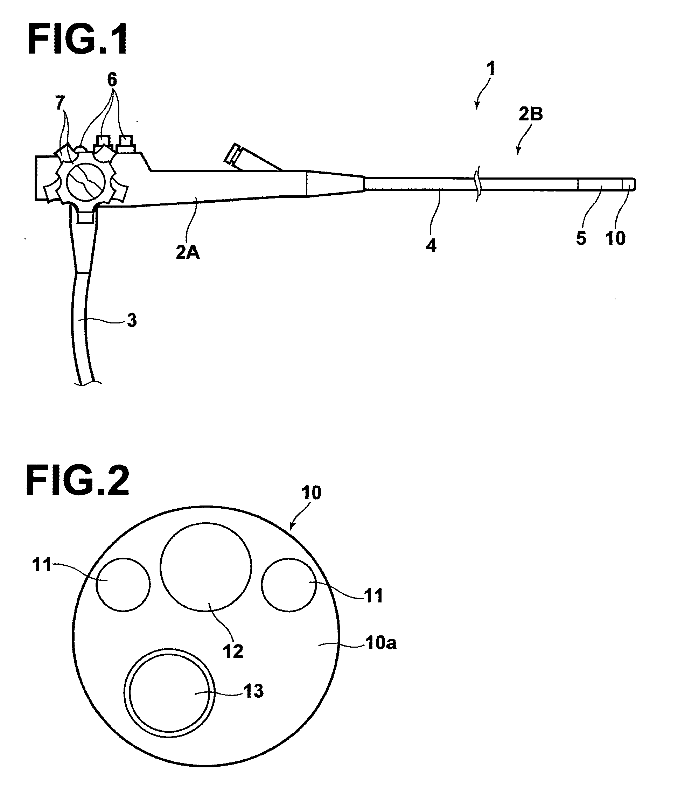

Hereinafter, embodiments of the present invention will be described in detail with reference to the accompanying drawings. Figure 1 schematically illustrates an exemplary embodiment of an endoscope insertion section in which a distal optical system of the present invention is employed. Endoscope 1 shown in Figure 1 has a structure in which insertion section 2B to be inserted into a body cavity is attached to body 2A. Body 2A has cable 3 optically and electrically connected thereto, button group 6 including an air/water supply button, a suction button, a shutter button, and the like, and angle knob 7 for bending deformable section 5. Insertion section 2B includes flexible section 4 extending from body 2A, deformable section 5 which is bent by the operation of angle knob 7 connected to flexible section 4, and distal end section 10 provided at the tip of deformable section 5. Distal end section 10 can be directed to a desired direction in which an observation region is located by the operation of angle knob 7.

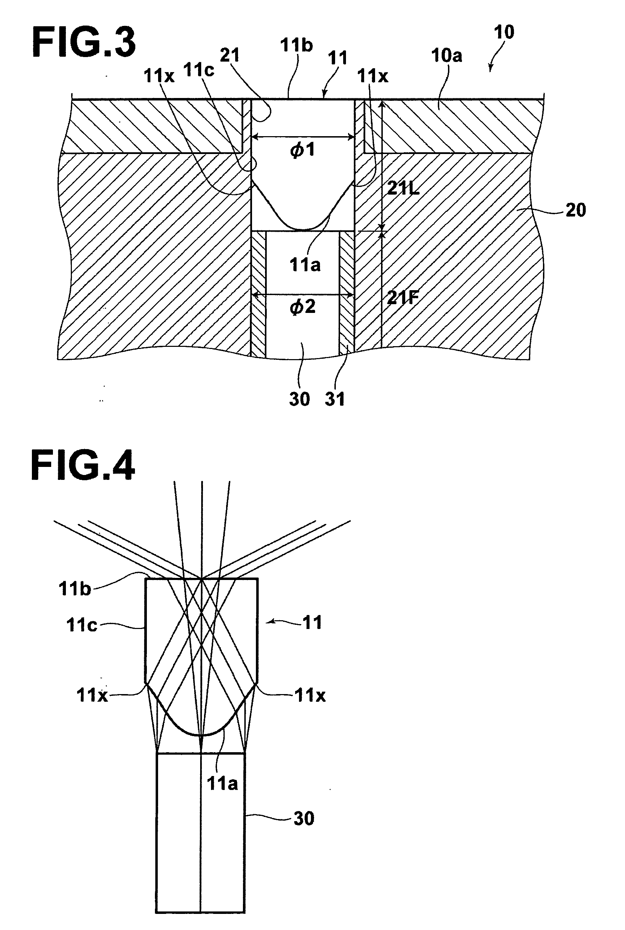

Figure 2 schematically illustrates an example of distal end section 10 of the endoscope. Figure 3 illustrates, in cross section, an example of illumination window in distal end section 10. In Figure 2, distal end section 10 includes illumination lenses 11, objective lens 12, and forceps opening 13. Illumination lenses 11 output illumination light emitted from a light source and guided through light guide 30, constituting an illumination window. Objective lens 12 focuses light representing a subject image, and the focused subj ect image is formed into an endoscope image by a not shown imaging device, such as CCD. A treatment tool is inserted into forceps opening 13 and the treatment tool may protrude from the distal end section 10.

In Figure 3, distal end section 10 includes distal end member 20 formed in a substantially cylindrical shape and distal end cap 10a made of, for example, a metal member and attached to distal end member 20. Illumination lens 11 is accommodated in through-hole 21 formed in distal end member 20 and fixed to distal end member 20 by adhesive or caulking. Further, light guide 30 which is, for example, an optical fiber bundle is fixed to the inside of through-hole 21 using a ferrule.

Illumination lens 11 has a positive aspheric surface 11a where light enters and exit surface 11b where the light entered from positive lens surface 11a exits to the outside and substantially cylindrical side surface 11c is formed between positive surface 11a and output surface 11b. Positive lens surface 11a has an aspheric shape such that the curvature gradually becomes smaller than the approximated curvature along the diameter direction of illumination lens 11 from the optical axis. More specifically, positive lens surface 11a is formed so as to satisfy h = f·θ (h = f·sinθ), where h is the incident light height, f is the focal length, and θ is the exit angle of light exiting from exit surface 11b. This allows illumination light with an appropriate illuminance distribution to be emitted to a spherical or tubular subject. Illumination lens 11 is described in detail in Japanese Unexamined Patent Publication 5 (1993) -119272 .

In the mean time, light guide 30 which is, for example, an optical fiber bundle is inserted in through-hole 21 and fixed therein in abutting with positive lens surface 11a or slightly separated therefrom. In particular, through-hole 21 is formed such that diameter ϕ2 of light guide accommodation section 21F for accommodating light guide 30 is not greater than diameter ϕ1 of cylindrical lens accommodation section 21L which is, for example, substantially corresponds to the diameter of side surface 11c . That is, an optical fiber bundle with diameter ϕ2 not greater than diameter ϕ1 of illumination lens 11 is used as light guide 30. This may realize a small diameter endoscope.

As shown in Figure 4, light outputted from light guide 30 is inputted to positive lens surface 11 of illumination lens 11 and reaches exit surface 11b by refracted at different angles according to the position, then directed to a subject from the exit surface 11b. As can be seen, there is no light blocking area that blocks the light in the space from the place where the light is outputted from light guide 30 to the place where the light is inputted to illumination lens 11. Accordingly, substantially the entirety of positive lens surface 11a, including outer circumferential region 11x, can be used as the effective diameter.

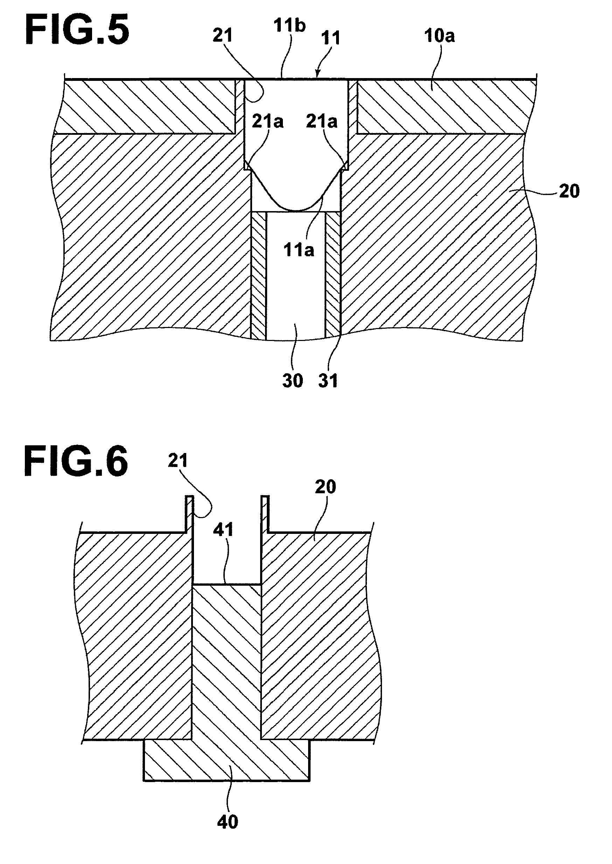

That is, as shown in Figure 5, if latch piece 21a is provided in through-hole 21 for holding or positioning illumination lens 11, the light outputted from light guide 30 is blocked by latch piece 21a, so that the portion of illumination lens 11 covered by latch piece 21a is not able to function as the lens. In contrast, lens accommodation section 21L is formed in a substantially cylindrical shape and side surface 11c of illumination lens 11 is also formed in a substantially cylindrical shape in Figure 3, resulting in that a space for the optical path of light is provided in front of positive lens surface 11a. That is, there is no light blocking member between illumination lens 11 and light guide 30, so that the light outputted from light guide 30 is not blocked by the latch piece or the like and substantially the entirety of positive lens surface 11a, including outer circumferential region 11x, can be used as the effective diameter.

In the mean time, illumination lens 11 needs to be positioned and fixed by an adhesive or the like in through-hole 21 of distal end member 20. Where latch piece 21a is provided, as in Figure 5, illumination lens 11 may be inserted into through-hole 21 and fixed by an adhesive while being held by latch piece 21a. In Figure 3, on the other hand, latch piece 21a for latching illumination lens 11 are not provided, which poses a problem that the positioning of illumination lens 11 in the depth direction of through-hole 21 is difficult. Consequently, illumination lens 11 is fixed to distal end member 20 in the manner shown in Figures 6 to 8.

Figures 6 to 8 schematically illustrates an exemplary embodiment of the assembly method of an illumination optical system for an endoscope of the present invention. The assembly method will be described with reference to Figures 1 to 8. As shown in Figure 6, positioning zig 40 is inserted into through-hole 21 from a first end. Tip surface 41 of positioning zig 40 is formed, for example, substantially flat, and the position of tip surface 41 is determined such that positive lens surface 11a of illumination lens 11 locates at a predetermined position.

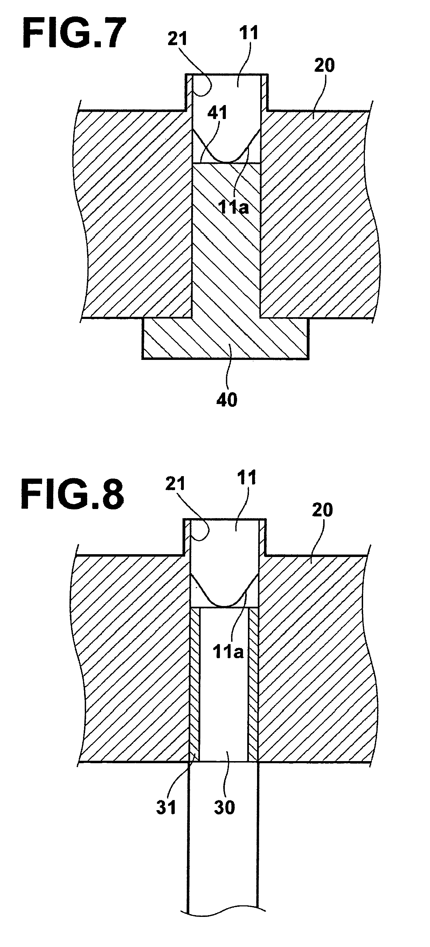

Thereafter, as shown in Figure 7, illumination lens 11 is inserted, from the side of positive lens surface 11a, into through-hole 21 from a second end. Then, positive lens surface 11a of illumination lens 11 is held by tip surface 41 of positioning zig 40. Under this state, illumination lens 11 is fixed in through-hole 21 by applying an adhesive between side surface 11c of illumination lens 11 and through-hole. After illumination lens 11 is fixed to distal end member 20, positioning zig 40 is drawn from through-hole 21.

Then, as shown in Figure 8, an optical fiber bundle, that is, light guide 30, is inserted into through-hole 21 from the first end and fixed therein in abutting with positive lens surface 11a. Finally, illumination lens 11 and light guide 30 are caulked to distal end member 20.

As illustrated in Figures 6 to 8, by fixing illumination lens 11 to distal end member 20 using positioning zig 40, positive lens surface 11a may be positioned at a predetermined position of distal end member 20 without providing latch piece 21a between positive lens surface 11a and light guide 30. Consequently, there is no light blocking area between positive lens surface 11a and light guide 30, so that substantially the entirety of positive lens surface 11a may be used as the effective diameter.

That is, the light outputted from light guide 30 (optical fiber bundle) spreads according to the numerical aperture (NA) of the optical fiber bundle and reaches as far as an edge portion of positive lens surface 11a (Figure 4) . Therefore, it is desirable to make even the edge portion of positive lens surface 11a function as the lens. But, where latch piece 21a is formed for latching illumination lens 11, as shown in Figure 5, the portion of the positive lens surface corresponding to the latch piece 21a is covered, possibly resulting in light amount loss of 10%. In contrast, as shown in Figure 3, the light amount loss may be minimized by assembling illumination lens 11 and light guide 30 without providing a light blocking member between them.

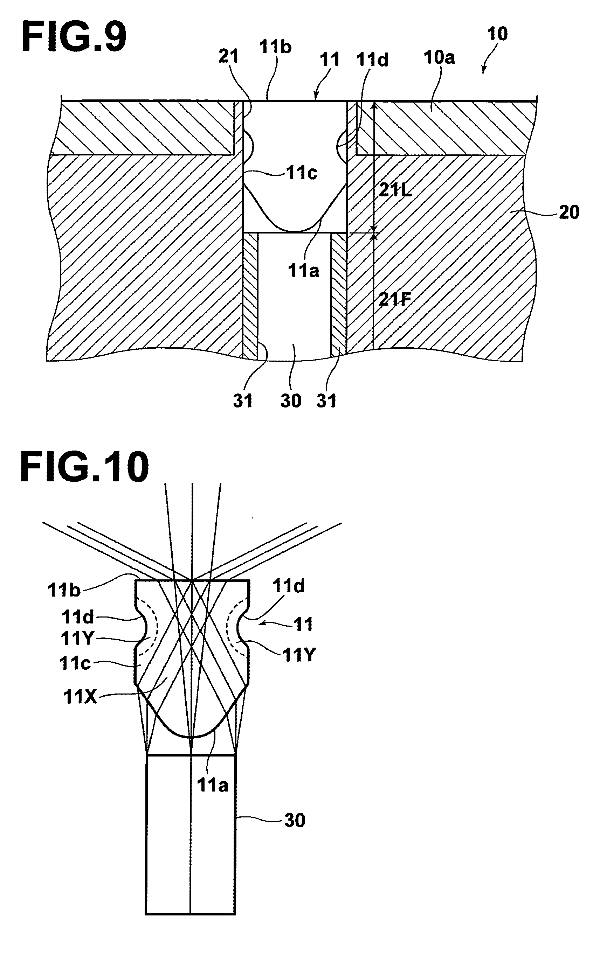

Figures 9 and 10 schematically illustrate an exemplary embodiment of the illumination lens for an endoscope of the present invention. Illumination lens 11 will be described with reference. to Figures 9 and 10. In illumination lens shown in Figures 9 and 10, components identical to those in illumination lens shown in Figures 3 and 4 are given the same reference numerals and will not be elaborated upon further here. The illumination lens shown in Figures 9 and 10 differs from the illumination lens shown in Figures 3 and 4 in that it has groove 11d.

That is, illumination lens 11 needs to be positioned in through-hole 21 of distal end member 20 and fixed by an adhesive or the like as described above. Here, if the amount of adhesive is excessive, some of the adhesive flows out to positive lens surface 11a from the side surface, and an outer circumferential region turns into a light blocking area. On the other hand, there is a problem that it is difficult to control the application amount of adhesive. Consequently, as shown in Figures 9 and 10, groove 11d is formed in side surface 11c as adhesive trap.

Groove 11d is formed in non-optical path area 11Y of illumination lens 11 where light does to path through. That is, illumination lens 11 includes optical path area 11X where the light inputted from positive lens surface 11a passes through to light exit surface 11b and non-optical path area 11Y, formed on the side of side surface 11c, where the light does not pass through. Groove 11d is formed in non-optical path area 11Y, so that the light outputted from exit surface 11b is not affected by groove 11d in any way. Optical path area 11X and non-optical path area 11Y are uniquely determined by the curvature of positive lens surface 11a, the diameter and length of illumination lens 11, and the like.

Groove 11d is formed in a ring shape along substantially cylindrical side surface 11c and in a streamline shape toward the axis direction. Accordingly, a space is defined between illumination lens 11 and distal end member 20. When an adhesive is applied between illumination lens 11 and distal end member 20, the adhesive is filled in groove 11d, forming an adhesive layer. Note that the adhesive layer may be formed in a portion of groove 11d, and the adhesive is not necessarily filled in the entire space in groove 11d.

When, an excessive amount of adhesive is applied to side surface 11c, the surplus amount of adhesive is trapped in groove 11d and prevented from flowing out to positive lens surface side. In particular, groove 11d is formed in a streamline shape so that, when the adhesive is flowed from exit surface 11b toward positive lens surface 11a, the adhesive may be flowed along side surface 11c and steadily into groove 11d.

It is also conceivable that the adhesive trap is provided on the side of through-hole 11, but it poses problems that it is difficult to form a groove on the side of through-hole 11 and the area occupied by illumination optical system in distal end section 10 is increased by a corresponding amount that the adhesive trap is formed on the outside, which is unfavorable for realizing a small diameter endoscope. In contrast, as shown in Figures 9 and 10, formation of groove 11d on the side of illumination lens 11 allows ease of work and realization of a small diameter endoscope. Further, this eliminates the need for delicate application amount control of adhesive, resulting in reduced work for the manufacture and improved yield rate.

According to the embodiments described above, the distal end section of the endoscope includes distal end member 20 having through-hole 21 formed therein, illumination lens 11 having positive lens surface 11a and substantially cylindrical side surface 11c, and light guide 30 fixed in through-hole 21 of distal end member 20 so as to face positive lens surface 11a of illumination lens 11. Through-hole 21 has substantially cylindrical lens accommodation section 21L for accommodating illumination lens 11 and light guide accommodation section 21F, in communication with lens accommodation section 21L, for accommodating light guide 30. Illumination lens 11 is fixed, at side surface 11c, to the inside of lens accommodation section 21L such that light outputted from light guide 30 is incident on outer circumferential region 11x of positive lens surface 11a, whereby, when illumination lens 11 is fixed to the inside of lens accommodation section 21L, a space for the optical path of light free from the blockage of distal end member 20 is provided in front of positive lens surface 11a. This allows the effective diameter of positive lens surface 11a to be extended to outer circumferential region 11x, resulting in reduced light amount loss at illumination lens 11.

Further, as shown in Figures 6 to 8, when fixing illumination lens having positive lens surface 11a and substantially cylindrical side surface 11c to the inside of substantially cylindrical through-hole 21, a positioning zig is inserted into through-hole from a first end, then illumination lens 11 is inserted, from the side of positive lens surface 11a, into through-hole 21 from a second end, and illumination lens 11 is fixed, at side surface 11c, to the inside of through-hole 21 while holding positive lens surface 11a by tip surface 41 of positioning zig 40. This eliminates the need for providing latch piece 21a on the side of distal end member 20 for positioning illumination lens 11 when assembling illumination lens 11, so that light blocking areas due to latch piece 21a may be prevented and substantially the entirety of positive lens surface 11a may be used as the effective diameter. That is, light amount loss at illumination lens 11 may be prevented and a bright endoscope image may be obtained.

Still further, as shown in Figures 9 and 10, provision of groove 11d in non-optical path area 11Y of side surface 11c of illumination lens 11 for trapping an adhesive, allows the adhesive to be deposited in the groove and prevented from flowing out to the side of positive lens surface 11a, so that positive lens surface 11a of illumination lens 11 is not blocked at all and the entire surface may be used as the effective diameter, whereby light amount loss at illumination lens 11 is prevented.

Further, where side surface 11c is formed in a substantially cylindrical shape and groove 11d is formed in a ring shape along a circumference of side surface 11c, the adhesive outflow may be prevented reliably over the entire circumference of positive lens surface 11a.

Still further, formation of groove 11d in a streamline shape toward the axis direction causes the adhesive to flow into groove 11d easily, so that the adhesive outflow is prevented reliably over the entire circumference of positive lens surface 11a.

It should be appreciated that the embodiments of the present invention are not limited to those described above. For example, in Figures 6 to 8, the description has been made of a case in which tip surface 41 of positioning zig 40 is formed flat, but the tip surface may have a recess having substantially the same shape as that of the positive lens surface. This ensures that illumination lens 11 is held reliably.

Further, in Figures 6 to 8, the description has been made of a case in which illumination lens 11 is inserted after tip surface 41 of positioning zig 40 is positioned at a predetermined position, but the position of illumination lens 11 may be adjusted by moving positioning zig 40 up or down while holding illumination lens 11.

Still further, in the embodiments, the description has been made of a case in which illumination lens 11 has positive lens surface 11a and flat exit surface 11b, but the present invention is applicable to illumination lens 11 of any shape as long as at least either one of the surfaces is positive lens surface 11a.

Further, the description has been made of a case in which illumination lens 11 and light guide 30 are disposed directly opposite to each other, but an optical member, such as a tubular reflecting mirror, a lens, or the like, may be provided between illumination lens 11 and light guide 30, if configured such that light is incident on outer circumferential region 11x of positive lens surface 11a.

Still further, the description has been made of a case in which groove 11d is formed in a ring shape, for example, in Figure 9 or 10, but the groove may be formed in a spiral shape along side surface 11c. Further, the description has been made of a case in which groove 11d has a streamline shape in cross section, but it may have a rectangular shape.

## Claims

1. An illumination optical system for an endoscope which includes a distal end member (20) with a through-hole (21), an illumination lens (11), fixed to the inside of the through-hole (21) of the distal end member (20), having a positive lens surface (11a) and a side surface (11c) formed in a substantially cylindrical shape, and a light guide (30) fixed to the inside of the through-hole (21) of the distal end member (20) so as to face the positive lens surface (1a) of the illumination lens (11), **characterized in that:**
the through-hole (21) has a lens accommodation section (21L), having a substantially cylindrical shape, for accommodating the illumination lens (11) and a light guide accommodation section (21F), in communication with the lens accommodation section (21L), for accommodating the light guide (30); and
illumination lens (11) is fixed, at the side surface (11c), to the inside of the lens accommodation section (21L) such that light outputted from the light guide (30) is incident on an outer circumferential region of the positive lens surface (11a).

2. The illumination optical system for an endoscope as claimed in claim 1, **characterized in that** the diameter of the light guide accommodation section (21F) is not greater than the diameter of the illumination lens accommodation section (21L).

3. The illumination optical system for an endoscope as claimed in claim 1 or 2, **characterized in that** the illumination lens (11) has a groove, in which an adhesive is filled, in a non-optical path area of the side surface (11c).

4. The illumination optical system for an endoscope as claimed in claim 3, **characterized in that** the groove is formed in a ring shape along a circumference of the side surface (11c).

5. The illumination optical system for an endoscope as claimed in claim 3 or 4, **characterized in that** the groove is formed in a streamline shape toward the optical axis of the illumination lens (11) .

6. An assembly method of an illumination optical system for an endoscope for fixing an illumination lens (11) having a positive lens surface (11a) and a side surface (11c) formed in a substantially cylindrical shape to the inside of a through-hole (21) formed in a substantially cylindrical shape in a distal end member (20), the method comprising the steps of:
inserting a positioning zig into the through-hole (21) from a first end;
inserting the illumination lens (11), from the side of the positive lens surface (11a), into the through-hole (21) from a second end; and
fixing the illumination lens (11), at the side surface (11c), to the inside of the through-hole (21) while holding the positive lens surface (11a) by a tip surface of the positioning zig.

7. The assembly method as claimed in claim 6, **characterized in that** the through-hole (21) has a lens accommodation section (21L) for accommodating the illumination lens (11) and a light guide accommodation section (21F), in communication with the lens accommodation section (21L), for accommodating a light guide (30), and the diameter of the light guide accommodation section (21F) is not greater than the diameter of the illumination lens accommodation section (21L).
